Europäisches Patentamt

European Patent Office

Office européen des brevets

(19)

(11) Publication number : **0 661 180 A1**

(12) **EUROPEAN PATENT APPLICATION**

(21) Application number : 94309696.6

(22) Date of filing : 22.12.94

(51) Int. Cl.⁶ : **B60C 9/22, B60C 9/20**

(30) Priority : **28.12.93 JP 349788/93**

(43) Date of publication of application :
**05.07.95 Bulletin 95/27**

(84) Designated Contracting States :
**DE FR GB**

(71) Applicant : **Sumitomo Rubber Industries Ltd.**
**6-9, 3-chome, Wakinohama-cho,**
**Chuo-ku**
**Kobe-shi, Hyogo-ken (JP)**

(72) Inventor : **Igarashi, Yasuo**
**5-10 Kouyoudai 2-chome**
**Kawanishishi, Hyogo-ken (JP)**

(74) Representative : **Stewart, Charles Geoffrey**
**SP TYRES UK LIMITED**
**Technical Division**
**Fort Dunlop, Erdington, Birmingham B24 9QT**
**(GB)**

(54) **Passenger radial tyre.**

(57)    A passenger pneumatic tyre having an aspect ratio of from 30% to 60%, in which the ride comfort is improve. The tyre comprises a radial carcass (6) turned up around bead cores (5), a breaker belt (7) comprising two cut-edge plies of organic fibre cords inclined at an angle of from 17 to 45 degrees with respect to the tyre equator, a band belt (9) disposed radially outside the breaker belt (7) and formed by spirally winding a ribbon of rubber in which at least one cord is embedded, the band cord being laid substantially parallel with the tyre equator, and the band cord having a modulus of not less than 600kgf/mm² and greater than that of the breaker cords.

FIG. 1

EP 0 661 180 A1

The present invention relates to a pneumatic tyre, more particularly a low-aspect-ratio passenger radial tyre with an improved belt being capable of improving ride comfort.

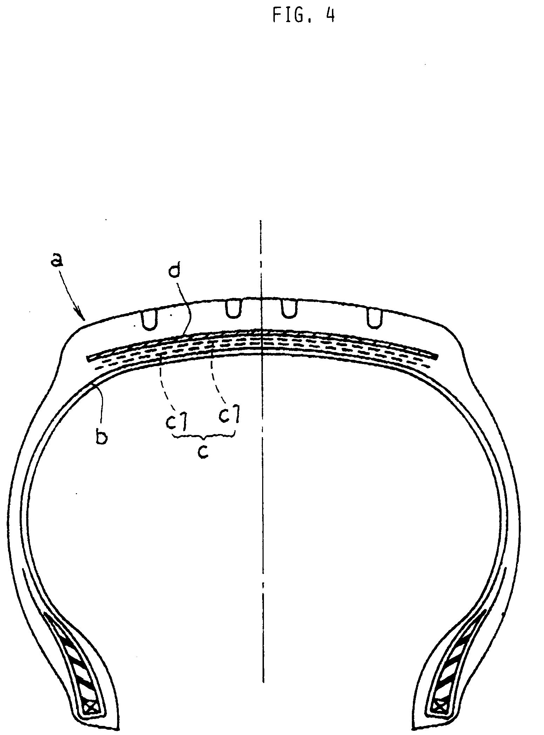

Hitherto, in a passenger radial tyre for high speed use designed to give priority to improved high speed durability, for example as shown in Figure 4, a breaker belt (c) comprising steel cord plies (c1) and a band belt (d) composed of spirally wound nylon cord were disposed radially outside the carcass (b) in the tread portion (a). The reason why the high modulus steel cords were used in the breaker belt (c) is to withstand the side forces caused by the slip angle during cornering.

Further, according to the recent tendency for an increase in power of passenger cars, in order to obtain good running performance, the aspect ratio of passenger tyres has been progressively lowered to relatively increase the tread width and rim diameter.

However, the use of low aspect ratios and high modulus steel cords in the breaker belt (c) decreases the ride comfort.

On the other hand, modern cars are designed in such a way that the camber angle for the front wheel tyres increases during cornering, thereby producing a certain camber thrust to decrease the side force applied to the tyre during cornering. Thus, the tyre does not suffer from the side force as before.

It is therefore an object of the present invention to provide a passenger radial tyre having a low aspect ratio, in which the ride comfort is improved by improving the belt structure.

According to one aspect of the present invention, a passenger pneumatic tyre having an aspect ratio of from 30% to 60% comprises a radial carcass extending between bead portions through a tread portion and sidewall portions and turned up around a bead core in each bead portion, a breaker belt comprising at least two cut-edge plies of organic fibre cords disposed radially outside the carcass in the tread portion, said breaker cords being inclined at an angle of from 17 to 45 degrees with respect to the tyre equator, a band belt disposed radially outside the breaker belt, said band belt being formed by spirally winding a ribbon of rubber in which at least one cord is embedded, so that said at least one band cord is laid substantially parallel with the tyre equator, said at least one band cord having a modulus of not less than 600kgf/mm$^2$ and greater than that of said breaker cords.

Preferably, the band belt cord is made of steel, and the breaker belt cord is made of aromatic polyamide.

More preferably, the band belt cord is made of aromatic polyamide, and the breaker belt cord is made of nylon.

Despite the breaker belt having cords changed from the known high modulus steel cords to lower modulus organic fibre cords such as aromatic polyamide, nylon or the like, the tyre is able to withstand the side force during cornering, and the belt as a whole is decreased in its resistance to a tread deformation. Therefore the ride comfort is improved.

If the band cord modulus is smaller than 600kgf/mm$^2$, the tread rigidity becomes lower to decrease the durability.

Further, as the breaker cords are inclined at an angle of from 17 to 45 degrees with respect to the tyre equator, the tread rigidity is appropriately maintained. If the angle is smaller than 17 degrees, the tread rigidity is excessively increased to deteriorate the ride comfort. If the angle is more than 45 degrees, the tread rigidity is excessively decreased to deteriorate the durability.

Further, if an aromatic polyamide band cord and nylon breaker cords are used, the roughness of ride of steel cords in the breaker is reduced and the ride comfort can be further improved.

An embodiment of the present invention will now be described in conjunction with the attached diagrammatic drawings in which:

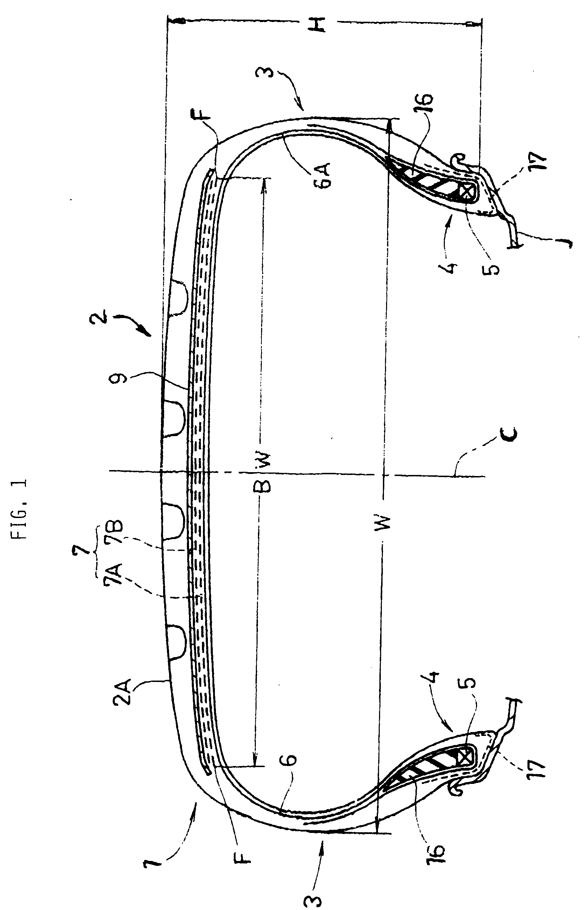

Figure 1 is a cross sectional view of an embodiment of the present invention;

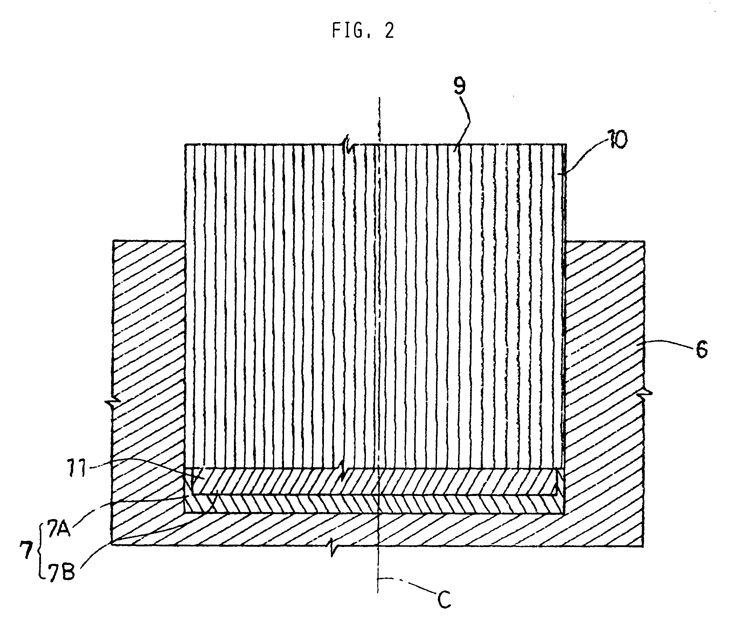

Figure 2 is a developed view showing the breaker belt and the band belt;

Figure 3 is a perspective view showing a long narrow ribbon for forming the band belt; and

Figure 4 is a cross sectional view of a tyre for explaining a prior art tyre.

In the figures, a passenger pneumatic radial tyre 1 according to the present invention comprises a tread portion 2, a pair of axially spaced bead portions 4, a pair of sidewall portions 3 extending between the tread edges and the bead portions 4, a pair of bead cores 5 each disposed in each of the bead portions 4, a carcass 6 extending between the bead portions 4 through the tread portion 2 and sidewall portions 3 and turned up around the bead cores 5 from the axially inside to outside of the tyre and a belt 7,9 disposed radially outside the carcass 6 and inside a rubber tread.

The aspect ration of the tyre 1 (section height H/section width W) is in the range of from 30% to 60%. In this embodiment, the tyre size is 225/50ZR16, and therefore the aspect ratio is 50%.

The tread portion 2 is provided with circumferential grooves and axial grooves to divide it into blocks to give a block type tread pattern.

The carcass 9 comprises at least one ply, in this embodiment only one ply 6A, of cords arranged radially at an inclination angle to 70 to 90 degrees with respect to the tyre equator C. For the carcass cords, organic fibre cords such as polyester are used. The carcass ply 6A extends between the bead portions 4 and is turned up at each edge around the bead cores 5 from the axially inside to the outside to form two turned up portions and one main portion therebetween.

Between the carcass main portion and each turned up portion, a bead apex 16 is disposed. The bead apex 16 is made of hard rubber tapering radially outwardly from the bead core 5. The bead portion 4 in this embodiment is further provided with a chafer 17 to reinforce the bead portion 4. The chafer 17 extends along the surface of the bead portion 4 to prevent wear and tear caused by contact with the rim J.

The belt includes a breaker belt 7 and a band belt 9.

The breaker belt 7 comprises two cut-edge plies 7A and 7B disposed adjacently to the carcass 6. Here, the cut-edge ply is a ply which extends continuously between its axial edges and whose axial edges are not folded. Each of the cut-edge plies 7A and 7B is composed of organic fibre cords 11 which are laid parallel with each other, inclining at an angle of 17 to 45 degrees with respect to the tyre equator C, so that the cords in the cut-edge ply 7A cross the cords in the cut-edge ply 7B. For such cords, aromatic polyamide fibre cords, nylon fibre cords or the like are used.

The width BW of the breaker belt 7 is substantially equal to the ground contacting width. Here, the ground contacting width is the maximum axial width of the ground contacting area of the tread portion with the tyre under a standard loaded condition mounted on a standard rim J, inflated to standard inner pressure and loaded with standard load. The breaker belt width BW is the axial distance between the axial outer edges F and F of the breaker belt 7 under the standard conditions but without a load applied.

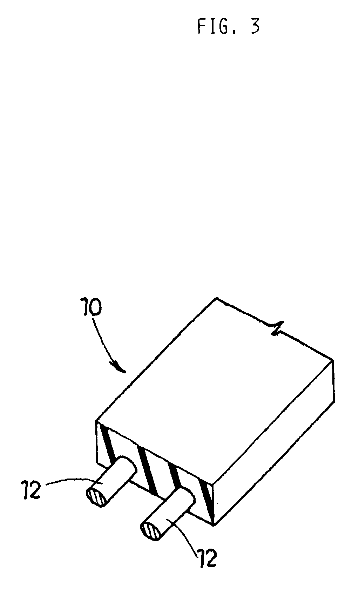

The band belt 9 comprises at least one ply, in this embodiment only one ply 9A, of at least one spirally wound organic or inorganic cord 12. As shown in Figure 3, the belt cords 12 -- in this embodiment two cords 12 are used -- are embedded in a rubber compound in the form of a ribbon or long narrow strip 10 in a parallel relationship. Such a ribbon 10 is wound, instead of an individual cord, from one edge F to the other edge F of the breaker belt 7 continuously and substantially parallel to the tyre equator C.

The band belt cord 12 has a modulus of not less than 600kgf/mm$^2$, and a steel cord or an organic fibre cord such as aromatic polyamide fibre cords is used so that the modulus of the breaker belt cord 11 is smaller than the modulus of the band belt cord 12.

If a steel cord is used for the band belt cord 12, an aromatic polyamide fibre cord (modulus: 830kgf/mm$^2$) is preferably used for the breaker belt cord 11. (Example tyre 1 in Table 1).

If an aromatic polyamide cord (modulus: 830kgf/mm$^2$) is used for the band belt cord 12, a 66-nylon cord (modulus: 446kgf/mm$^2$) is preferably used for the breaker belt cord 11. (Example tyre 2 in Table 1).

Table 1 shows the belt cord specifications and results of a ride comfort test.

TABLE 1

| Tyre | Ex. 1 | Ex.2 | Ref |
|---|---|---|---|
| Carcass<br>  No. of ply<br>  Cord material | <br>1<br>polyester | <br>1<br>polyester | <br>1<br>polyester |
| Belt cord<br>  Material<br><br><br>  Final twist<br>  (turn/10cm)<br>  Primary twist<br>  (turn/10cm)<br>  Count | <br>aramid *1<br>1000 denier<br>666 filaments X1<br>S-twist<br>42+-1.5<br>S-twist<br>42+-1.5<br>49 ends | <br>66-nylon<br>840 denier<br>140 filaments X2<br>Z-twist<br>37.2+-1.2<br>S-twist<br>47.2+-1.2<br>49 ends | <br>steel<br>1x5/0.25<br><br>S-twist<br>42+-1.5<br>S-twist<br>42+-1.5<br>35 ends |
| Band cord<br>  Material<br><br><br>  Final twist<br>  (turn/10cm)<br>  Primary twist<br>  (turn/10cm)<br>  Count | <br>steel<br>1X5/0.25<br><br>S-twist<br>42+-1.5<br>S-twist<br>42+-1.5<br>35 ends | <br>aramid *1<br>1000 denier<br>666 filaments X1<br>S-twist<br>42 +-1.5<br>S-twist<br>42+-1.5<br>49 ends | <br>66-nylon<br>1260 denier<br>210 filaments X2<br>Z-twist<br>38.2+-1.0<br>S-twist<br>38.2+-1.0<br>51 ends |
| Ride comfort<br>  (index) | <br>109 | <br>120 | <br>100 |

*1 Aromatic polyamide (Kevlar)

Through the test, it was confirmed that the Example tyres 1 and 2 were superior in ride comfort to the Reference tyre.

**Claims**

1. A passenger pneumatic tyre having an aspect ratio of from 30% to 60%, said tyre comprising a radial carcass (6) extending between bead portions (4) through a tread portion (2) and sidewall portions (3) and turned up around a bead core (5) in each bead portion (4) ,characterised by a breaker belt (7) comprising at least two cut-edge plies (7A,7B) of organic fibre cords disposed radially outside the carcass (6) in the tread portion, said breaker cords being inclined at an angle of from 17 to 45 degrees with respect to the tyre equator, a band belt (9) disposed radially outside the breaker belt (7), said band belt (9) being formed by spirally winding a ribbon of rubber in which at least one cord is embedded, so that said at least one band cord is laid substantially parallel with the tyre equator, said at least one band cord having a modulus of not less than 600kgf/mm$^2$ and greater than that of said breaker cords.

2. A passenger pneumatic radial tyre according to claim 1, characterised in that the band cord is made of steel, and the breaker cords are made of aromatic polyamide.

3. A passenger pneumatic radial tyre according to claim 1, characterised in that the band cord is made of aromatic polyamide, and the breaker cord is made of nylon.

FIG. 1

FIG. 2

FIG. 3

FIG. 4

**European Patent Office**

# EUROPEAN SEARCH REPORT

Application Number

EP 94 30 9696

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 472 425 (SUMITOMO RUBBER IND.,CO. LTD)<br>* page 5, line 1 - line 23; claims; figures; table 1 * | 1,3 | B60C9/22<br>B60C9/20 |
| X | EP-A-0 488 734 (BRIDGESTONE CORP.)<br>* page 2, line 1 - line 6; claims; figures *<br>* page 3, line 23 - line 30 * | 1 | |
| Y | US-A-4 987 938 (USHIKUBO ET AL.)<br>* column 4, line 1 - line 30; claims; figures * | 1,3 | |
| Y | EP-A-0 412 928 (THE GOODYEAR TIRE&RUBBER CO.)<br>* page 2, line 54 - page 3, line 27; claims; figures * | 1,3 | |
| A | EP-A-0 463 875 (SUMITOMO RUBBER IND.,CO. LTD)<br>* claims; figures * | 1-3 | TECHNICAL FIELDS SEARCHED (Int.Cl.6) |
| A | US-A-4 454 903 (D. NOEL ET AL.)<br>* claims; figures * | 1,2 | B60C |
| A | GB-A-2 061 202 (PIRELLI S.P.A.)<br>* claims; figures * | 1,2 | |

The present search report has been drawn up for all claims

| Place of search | Date of completion of the search | Examiner |
|---|---|---|
| THE HAGUE | 7 April 1995 | Baradat, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document